# FASCICULE DE BREVET EUROPEEN

(11) **EP 2 623 748 B1**
(45) Date de publication et mention de la délivrance du brevet: **25.02.2015**
(21) Numéro de dépôt: 12008238.3
(22) Date de dépôt: 10.12.2012
(51) Int. Cl.: F02C 9/00, B64D 31/00, G07C 5/08, G05B 23/02

(54) **Procédé et dispositif pour réaliser un contrôle de santé d'un turbomoteur d'un aéronef pourvu d'au moins un turbomoteur**
Verfahren und Vorrichtung zur Überprüfung des Zustands eines Turbomotors eines Luftfahrzeugs, das mit mindestens einem Turbomotor ausgestattet ist
Method and device for monitoring the health of a turbine engine of an aircraft provided with at least one turbine engine

(30) Priorité: 06.02.2012 FR 1200341
(43) Date de publication de la demande: 07.08.2013
(73) Titulaire: Airbus Helicopters, 13725 Marignane Cedex (FR)
(72) Inventeur: Camhi, Emmanuel, 13710 Fuveau (FR); Borchers, Guido, 13007 Marseille (FR)
(74) Mandataire: Pouillot, Laurent Pierre Paul

(56) Documents cités:
- FR-A1- 2 902 408
- US-B2- 7 487 029

## Description

La présente invention concerne un procédé et un dispositif permettant de réaliser un contrôle de l'état de santé d'un turbomoteur agencé sur un aéronef, cet aéronef étant pourvu d'au moins un turbomoteur.

Cet aéronef peut être un aéronef à voilure tournante connu aussi sous l'appellation giravion. Toutefois, l'aéronef peut être dépourvu d'une telle voilure tournante.

En effet, le pilotage d'un giravion s'effectue grâce à la surveillance de nombreux instruments sur le tableau de bord. Ces instruments sont pour la plupart représentatifs du fonctionnement de l'installation motrice du giravion.

Pour des raisons physiques, il existe de nombreuses limitations que le pilote doit prendre en compte à chaque instant de vol. Ces différentes limitations dépendent généralement de la phase de vol et des conditions extérieures.

Dans ces conditions, la plupart des giravions construits actuellement sont équipés d'au moins un turbomoteur à turbine libre pour entraîner en rotation une voilure tournante. La puissance motrice est alors prélevée sur un étage basse pression de chaque turbine libre, lequel étage est mécaniquement indépendant de l'ensemble du compresseur et de l'étage haute pression du turbomoteur. Chaque turbine libre des turbomoteurs ayant une vitesse de rotation comprise entre 20 000 et 50 000 tours par minute, une boîte de réduction de vitesse est nécessaire pour la liaison au rotor principal dont la vitesse de rotation est sensiblement comprise entre 200 et 400 tours par minute: il s'agit de la boîte de transmission principale de puissance.

Les limitations thermiques du turbomoteur et les limitations en couple de la boîte de transmission principale permettent de définir par exemple trois régimes normaux d'utilisation du turbomoteur:
Parmi les régimes connus, on peut citer:
   - le régime de décollage associant une puissance maximale au décollage PMD à une durée d'utilisation de 5 minutes
   - le régime maximal continu associant une puissance maximale en continu PMC à une durée d'utilisation illimité,
   - le régime transitoire associant une puissance maximale en transitoire PMT à une durée d'utilisation limitée de l'ordre de 20 secondes.

Il existe aussi des régimes de surpuissance en urgence sur les aéronefs comprenant au moins deux turbomoteurs, ces régimes étant utilisés lorsque l'un des turbomoteurs tombe en panne:
- un premier régime d'urgence associant une puissance de super urgence OEI30" à une durée de l'ordre de trente secondes consécutives, ce premier régime d'urgence pouvant être utilisé environ trois fois pendant un vol;
- un deuxième régime d'urgence associant une puissance maximale d'urgence OEI2' à durée d'utilisation de l'ordre de deux minutes ;
- un troisième régime d'urgence associant une puissance intermédiaire d'urgence OElcont à une durée d'utilisation couvrant la fin d'un vol après la panne du turbomoteur par exemple.

Dans ces conditions, le motoriste établit, par calculs ou par essais, les courbes de puissance disponible d'un turbomoteur en fonction de l'altitude et de la température, et cela pour chacun des régimes définis ci-dessus. De même, il détermine la durée de vie du turbomoteur ainsi que la puissance minimale garantie pour chaque régime, cette puissance minimale garantie correspondant à la puissance que fournira le turbomoteur lorsqu'il aura atteint sa durée de vie, un tel turbomoteur étant dénommé « turbomoteur vieilli » par commodité dans la suite du texte.

Pour vérifier que le turbomoteur fonctionne correctement, il convient donc de réaliser un contrôle de santé pour s'assurer que ce turbomoteur a des performances supérieures ou égales aux performances d'un turbomoteur vieilli. De plus, le contrôle de santé peut viser à garantir les puissances d'urgence en cas de pannes d'un turbomoteur.

Un tel contrôle de santé consiste à déterminer la marge de puissance d'un turbomoteur par rapport à une puissance minimale mesurée par exemple sur un banc d'essais. Si cette marge de puissance est positive, le turbomoteur demeure à même de fournir les puissances requises. A l'inverse, une action de maintenance doit être entreprise pour rétablir les performances du turbomoteur.

Le contrôle de santé peut être réalisé en déterminant une marge de puissance en tant que telle, ou en déterminant une marge d'un paramètre de surveillance du turbomoteur par rapport à une mesure réalisée sur un banc d'essais.

De manière générale, on détermine donc une marge de fonctionnement pouvant être une marge de puissance ou une marge d'un paramètre de surveillance.

Deux paramètres de surveillance sont notamment utilisés pour contrôler les performances d'un turbomoteur.

Le turbomoteur étant pourvu d'un ensemble de turbines, un paramètre de surveillance peut être une température des gaz circulant dans cet ensemble.

Notamment, une turbine haute pression étant disposée en amont d'un turbine libre, un premier paramètre de surveillance peut être la température, dénommée TET par l'homme du métier, des gaz à l'entrée de la turbine haute pression.

En effet, les aubes de la turbine haute pression du turbomoteur sont soumises à la force centrifuge et à la température TET. Au-delà d'un certain niveau, le matériau constitutif des aubes est soumis à un fluage ce qui a pour conséquence une dilatation allongeant les aubes. Ainsi, ces aubes sont amenées à toucher le carter de la turbine haute pression et donc à se dégrader. La température TET est donc bien directement liée à la dégradation du turbomoteur.

Néanmoins, la température TET étant très difficile à mesurer en raison de son caractère relativement inhomogène, le premier paramètre de surveillance peut être la température, dénommée T45 par l'homme du métier, des gaz à l'entrée de la turbine libre. Cette température T45 est un bon indicateur de la température TET, par suite elle est représentative de la dégradation du turbomoteur.

Un premier paramètre de surveillance est donc une température d'un ensemble d'au moins une turbine, cette température pouvant être la température TET des gaz à l'entrée de la turbine haute pression ou la température T45 des gaz à l'entrée de la turbine libre.

Un contrôle de santé peut consister à déterminer une marge de température par rapport à une température minimale de référence.

Par ailleurs, un deuxième paramètre de surveillance est relatif à la puissance délivrée par le turbomoteur ou encore au couple du turbomoteur, la puissance et le couple du turbomoteur étant intimement liés. Néanmoins, la vitesse de rotation du générateur de gaz du turbomoteur, dénommée Ng par l'homme du métier, étant finalement liée à la puissance délivrée par le turbomoteur, le deuxième paramètre de surveillance retenu peut être cette vitesse de rotation du générateur de gaz.

Par suite, le contrôle de l'état de santé du turbomoteur consiste par exemple soit :
- à mesurer le premier paramètre de surveillance puis à vérifier que la valeur de la puissance courante est supérieure ou égale à la valeur de puissance qu'aurait un turbomoteur vieilli dans les mêmes conditions, ou
- à mesurer le deuxième paramètre de surveillance puis à vérifier que la valeur de la puissance courante est supérieure ou égale à la valeur de puissance qu'aurait un turbomoteur vieilli dans les mêmes conditions.

Il est aussi possible de mesurer un couple moteur et une vitesse de rotation pour en déduire la puissance développé par un turbomoteur. Par exemple, on mesure le couple exercé sur un arbre de sortie entraîné par la turbine libre et la vitesse de rotation de cet arbre de sortie. Alternativement, il est possible de mesurer la vitesse de rotation du rotor principal, et de multiplier cette vitesse de rotation par un coefficient correspondant au rapport de réduction de vitesse existant entre la vitesse de rotation de l'arbre de sortie et la vitesse de rotation du rotor principal.

Selon une alternative, on effectue le vol avec une vitesse de rotation Nr du rotor principal donnée, et on mesure ledit couple. A l'aide d'abaques, on en déduit une marge de couple.

Le contrôle de santé doit être effectué de façon rigoureuse car s'il s'avère négatif, c'est-à-dire si les vérifications précitées ne donnent pas des résultats satisfaisants, il aura un impact non négligeable sur une éventuelle immobilisation de l'aéronef et sur les coûts de maintenance de cet aéronef.

Pour comparer les résultats de mesures effectuées en vol avec des mesures effectuées sur un banc d'essais, il est préférable de rapprocher les conditions de mesure en vol et sur banc d'essais.

Les mesures effectuées sur un banc d'essais sont réalisées dans des conditions thermiquement stables.

Dès lors, pour réaliser un contrôle de santé en vol, un pilote place l'aéronef dans une phase de vol particulière telle qu'un vol en palier à altitude et vitesse stabilisées pendant plusieurs minutes. Le pilote peut alors lancer une action manuelle requérant la collecte des paramètres de surveillance nécessaires au contrôle de santé, puis le calcul d'au moins une marge de fonctionnement.

Ce procédé comporte alors : une étape de stabilisation de l'aéronef, une étape d'acquisition d'au moins une valeur d'un paramètre de surveillance, et une étape d'évaluation d'une marge de fonctionnement. Une étape de maintenance du turbomoteur peut ensuite être entreprise en fonction des résultats de l'étape d'évaluation.

Le document FR 2 899 640 décrit un procédé pour réaliser un contrôle de santé d'au moins un premier turbomoteur d'un giravion, ce giravion étant pourvu d'un premier et d'un deuxième turbomoteurs.

Le document US7 487 029 propose une méthode pour surveiller les performances d'un turbomoteur dans un but de planification de maintenance.

Le document US 8 068 997 propose une méthode d'analyse de performances d'un turbomoteur en temps réel en utilisant une fonction de transfert et des outils statistiques.

Le document EP 1 970 786 propose un procédé pour analyser les données opérationnelles d'un moteur et leurs erreurs potentielles.

Le document EP 2 202 500 dévoile un système pour assister la maintenance et l'opération d'une turbine à gaz.

On connait aussi le document FR 2902408.

La présente invention a pour objet de proposer un procédé et un dispositif permettant d'établir des critères de stabilité pour éventuellement réaliser un contrôle de santé de manière automatique et non pas sur requête manuelle.

Selon l'invention, on met en oeuvre un procédé pour réaliser automatiquement un contrôle de santé moteur d'au moins un turbomoteur d'un aéronef comprenant une étape d'acquisition d'au moins un paramètre de surveillance du turbomoteur et d'une étape d'évaluation de la santé dudit turbomoteur.

On se référera à la littérature pour obtenir des informations explicitant comment réaliser l'étape d'acquisition et l'étape d'évaluation.

L'aéronef peut éventuellement comprendre une voilure tournante.

Ce procédé est notamment remarquable en ce que l'on détermine automatiquement s'il est possible de réaliser l'étape d'acquisition, et donc sans solliciter une intervention manuelle d'un pilote.

Dès lors, durant un vol, on détermine si l'aéronef effectue un vol d'avancement en palier.

En effet, il est notamment possible de prendre en considération des effets d'avionnage lors de l'étape d'évaluation, de tels effets d'avionnage pouvant être déterminés durant une phase de vol en palier.

Les effets d'avionnage sont dus par exemple aux pertes d'installation comprenant des pertes de charges dans les entrées d'air des turbomoteurs ou encore aux distorsions de pressions voire même aux tuyères. De plus, les effets d'avionnage incluent les prélèvements de puissance réalisés sur le turbomoteur par des accessoires, l'altitude de l'aéronef, la température extérieure notamment.

En outre, le turbomoteur à contrôler peut être relativement stable durant une telle phase de vol, ces conditions de fonctionnement se rapprochant alors nettement des conditions de fonctionnement sur banc d'essais.

Si l'aéronef effectue un vol d'avancement en palier, on vérifie alors la stabilité d'au moins un paramètre de surveillance en :
∘ acquérant un signal de mesure d'au moins un paramètre de surveillance du turbomoteur suivant un échantillonnage défini par le constructeur, de l'ordre du dixième de seconde par exemple,
∘ effectuant un premier filtrage par un filtre passe haut de chaque signal sur une première durée longue et en vérifiant qu'une première amplitude du signal ainsi filtré ne dépasse pas un premier seuil défini par le constructeur,
∘ effectuant un deuxième filtrage par un filtre passe haut de chaque signal sur une deuxième durée courte en parallèle dudit premier filtrage par un filtre passe haut et en vérifiant qu'une deuxième amplitude du signal ainsi filtré ne dépasse pas un deuxième seuil défini par le constructeur, la deuxième durée étant inférieure à la première durée, la deuxième amplitude étant inférieure à la première amplitude,
∘ en considérant stable un paramètre de surveillance lorsque ladite première amplitude est inférieure au premier seuil et lorsque ladite deuxième amplitude est inférieure au deuxième seuil, et

- on déclenche automatiquement une étape d'acquisition si chaque paramètre de surveillance est stable.

Lorsque la première amplitude et la deuxième amplitude sont en même temps inférieures au premier seuil et au deuxième seuil, le turbomoteur est suffisamment stable pour assurer un contrôle de santé efficace et précis.

Les deux critères établis permettent donc le déclenchement automatique d'un contrôle de santé en vol sans perturber ce vol. De même, ce procédé permet d'éviter de forcer le pilote à stabiliser l'aéronef de manière prédéterminée.

Lorsque ces deux critères sont respectés, on réalise l'étape d'acquisition puis l'étape d'évaluation. Cette étape d'évaluation peut ensuite conduire à une étape de maintenance.

Le procédé peut de plus comprendre une ou plusieurs des caractéristiques qui suivent.

Par exemple, pour déterminer si l'aéronef effectue un vol d'avancement en palier, on peut mesurer une vitesse d'avancement de l'aéronef et une donnée relative à l'altitude de l'aéronef, l'aéronef réalisant un vol en palier si la vitesse d'avancement est supérieure à une vitesse minimale définie par le constructeur et si une variation de la donnée relative à l'altitude sur une plage temporelle donnée est inférieure à une constante définie par le constructeur.

Une telle donnée relative à l'altitude peut être indifféremment soit l'altitude pression de l'aéronef soit la pression extérieure de l'air à l'extérieur de l'aéronef.

Ainsi, on s'assure que l'aéronef n'effectue pas un vol stationnaire par exemple, mais effectue un vol d'avancement à une altitude relativement constante.

Selon un autre aspect, la première durée et la deuxième durée s'achèvent éventuellement en même temps. Dès lors les deux critères de stabilité établis sont vérifiés en même temps.

Selon une variante, la première durée vaut, 4 minutes, la deuxième durée valant 30 secondes pour optimiser les résultats.

Par ailleurs, chaque paramètre de surveillance est à choisir dans une liste incluant au moins un des paramètres suivants : la vitesse de rotation Ng d'un générateur de gaz dudit turbomoteur, une température TET des gaz à l'entrée d'une turbine haute pression du turbomoteur, une température T45 des gaz à l'entrée d'une turbine libre dudit turbomoteur, un couple délivré par le turbomoteur, une température d'entrée T1 de l'air à l'entrée du turbomoteur.

Par exemple et pour optimiser les résultats, le premier seuil vaut 2% pour la vitesse de rotation Ng d'un générateur de gaz dudit turbomoteur, 15 degrés Celsius pour la température TET des gaz à l'entrée d'une turbine haute pression du turbomoteur et la température T45 des gaz à l'entrée d'une turbine libre dudit turbomoteur, 2% pour un couple délivré par le turbomoteur, 2 degrés Celsius pour la température d'entrée T1 de l'air à l'entrée du turbomoteur.

Il est en effet courant d'évaluer la vitesse de rotation Ng et le couple délivré par un turbomoteur en pourcentage d'une vitesse de rotation Ng et d'un couple de référence. Dès lors, les seuils associés peuvent aussi être exprimés en pourcentages.

De plus, le deuxième seuil peut valoir 0.5% pour la vitesse de rotation Ng d'un générateur de gaz dudit turbomoteur, 5 degrés Celsius pour la température TET des gaz à l'entrée d'une turbine haute pression du turbomoteur et la température T45 des gaz à l'entrée d'une turbine libre dudit turbomoteur, 0.5% pour un couple délivré par le turbomoteur, 0.5 degrés Celsius pour la température d'entrée T1 de l'air à l'entrée du turbomoteur.

Selon une réalisation, pour effectuer un filtrage par un filtre passe haut, on effectue une moyenne glissante sur une période définie par le constructeur de la valeur de chaque paramètre de surveillance.

Par exemple si la période définie vaut 20 secondes, à chaque instant, la moyenne glissante correspond à la moyenne de la valeur de chaque paramètre de surveillance au cours des 20 dernières secondes.

A chaque instant donné, on retranche cette moyenne glissante à la valeur du signal correspondant à ce paramètre de surveillance audit instant donné.

On vérifie alors que le résultat de cette soustraction est inférieur au premier seuil durant la première durée et au deuxième seuil durant la deuxième durée. Dans l'affirmative, une étape d'acquisition peut être déclenchée.

Par exemple, si durant 4 minutes le résultat de cette soustraction est inférieur au premier seuil, et si durant les 30 dernières seconde de cette durée de 4 minutes le résultat de cette soustraction est inférieur au deuxième seuil, une étape d'acquisition peut être déclenchée.

Lors de l'étape d'acquisition, à savoir à partir du déclenchement de l'étape d'acquisition et au cours de cette étape d'acquisition, on peut générer une alerte pour informer un pilote afin d'éviter une manoeuvre brusque de ce pilote.

En effet, le contrôle de santé est réalisé automatiquement. On informe alors le pilote afin que ce pilote ne déstabilise pas le fonctionnement du turbomoteur.

Si néanmoins le pilote agit sur l'aéronef, le contrôle de santé peut être annulé automatiquement pour ne pas générer des résultats non représentatifs de la santé réelle du turbomoteur contrôlé.

Par ailleurs, sur un aéronef comportant au moins deux turbomoteurs, le procédé peut inclure une logique de contrôle pour contrôler les turbomoteurs les uns après les autres.

Sur un aéronef bimoteur, on peut appliquer le procédé selon l'invention pour un premier turbomoteur.

Lorsque ce premier turbomoteur est contrôlé, on réapplique le procédé au deuxième turbomoteur.

Dès lors, on peut effectuer un autre de cycle de contrôle, à l'issue d'une période de vol prédéterminée par exemple.

De plus, pour optimiser un contrôle sur un aéronef ayant plusieurs turbomoteurs, on peut désactiver un prélèvement d'air P3 effectué sur un générateur de gaz du turbomoteur à contrôler avant de déclencher l'étape d'acquisition, et on peut augmenter le prélèvement d'air effectué sur au moins un autre turbomoteur pour compenser un telle désactivation si nécessaire.

Suite à la désactivation du prélèvement d'air effectué sur un générateur de gaz du turbomoteur à contrôler, on peut vérifier de nouveau la stabilité d'au moins un paramètre de surveillance du turbomoteur, et on déclenche l'étape d'acquisition si chaque paramètre de surveillance est stable.

L'arrêt du prélèvement d'air P3 peut déstabiliser le turbomoteur à contrôler. On peut alors mettre en oeuvre l'étape de vérification de la stabilité explicitée précédemment afin d'attendre que le turbomoteur soit de nouveau stable pour effectuer un contrôle de santé.

Il est possible de mettre en oeuvre les mêmes première et deuxième durées que lors de la vérification initiale de stabilité, ou encore des première et deuxième durées différentes et éventuellement réduites.

Outre un procédé, l'invention concerne un dispositif de contrôle pour réaliser automatiquement un contrôle de santé moteur d'au moins un turbomoteur d'un aéronef comprenant une étape d'acquisition d'au moins un paramètre de surveillance du turbomoteur et une étape d'évaluation de la santé du turbomoteur, **caractérisé en ce que** ce dispositif de contrôle comporte :
- un premier système de mesure d'au moins une information relative à un avancement de l'aéronef dans l'espace,
- un deuxième système de mesure générant au moins un signal relatif à la valeur d'au moins un paramètre de surveillance
- un dispositif de traitement muni d'un calculateur et d'un moyen de stockage, le calculateur exécutant des instructions mémorisées dans le moyen de stockage pour vérifier la stabilité d'au moins un paramètre de surveillance selon ledit procédé à partir dudit au moins un signal et, pour déclencher automatiquement une étape d'acquisition si chaque paramètre de surveillance est stable.

Le premier système peut comprendre un moyen de mesure de la vitesse d'avancement de l'aéronef, voire un moyen de mesure de l'altitude de cet aéronef.

Le deuxième système peut comprendre un moyen de mesure d'au moins un des paramètres suivants : la vitesse de rotation Ng d'un générateur de gaz dudit turbomoteur, une température TET des gaz à l'entrée d'une turbine haute pression du turbomoteur, une température T45 des gaz à l'entrée d'une turbine libre dudit turbomoteur, un couple Tq délivré par le turbomoteur, une température d'entrée T1 de l'air à l'entrée du turbomoteur.

Le calculateur du dispositif de traitement peut comprendre une unité de calcul par turbomoteur, par exemple une unité de calcul d'un calculateur moteur FADEC de chaque turbomoteur.

De même, le moyen de stockage peut comprendre une unité de stockage par moteur, par exemple une unité de stockage d'un calculateur moteur FADEC de chaque turbomoteur.

De plus, le dispositif de traitement peut comprendre un calculateur avionique communiquant avec chaque unité de calcul.

Selon un autre aspect, l'aéronef comportant au moins deux turbomoteurs, chaque turbomoteur ayant un moyen de prélèvement d'air sur un générateur de gaz de ce turbomoteur, ledit dispositif de traitement est relié à chaque moyen de prélèvement d'air pour désactiver le prélèvement d'air sur le turbomoteur à contrôler avant de déclencher l'étape d'acquisition, et pour augmenter le prélèvement d'air effectué sur au moins un autre turbomoteur pour compenser un telle désactivation

Le dispositif de contrôle peut de plus comprendre un moyen de désactivation du contrôle de santé automatique et un moyen de signalisation de la réalisation d'un contrôle de santé.

L'invention vise aussi un aéronef muni d'un tel dispositif de contrôle

L'invention et ses avantages apparaîtront avec plus de détails dans le cadre de la description qui suit avec des exemples de réalisation donnés à titre illustratif en référence aux figures annexées qui représentent :
- la figure 1, un aéronef muni d'un unique turbomoteur,
- les figures 2 et 3, des schémas explicitant le procédé appliqué à un aéronef monomoteur,
- la figure 4, un aéronef muni d'au moins deux turbomoteurs, et
- la figure 5, un schéma explicitant le procédé appliqué à un aéronef pourvu d'au moins deux turbomoteurs.

Les éléments présents dans plusieurs figures distinctes sont affectés d'une seule et même référence.

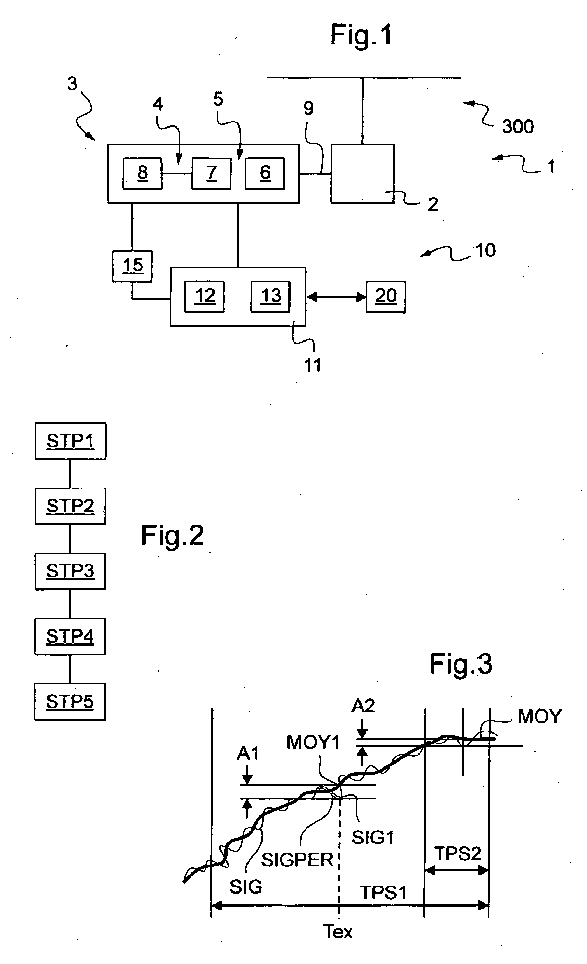

La figure 1 présente un aéronef 1 muni d'une voilure tournante 300. Toutefois, l'invention peut aussi s'appliquer à un autre type d'aéronef.

L'aéronef 1 comporte au moins un turbomoteur 3 pour entraîner la voilure tournante 300 au travers d'une boîte de transmission de puissance 2. Chaque turbomoteur comporte un générateur de gaz 4 et un ensemble 5 de turbines.

Par exemple, le générateur de gaz comporte un compresseur 8 coopérant avec une turbine haute pression 7 de l'ensemble 5.

De plus, l'ensemble 5 de turbines inclut une turbine libre 6 liée à la boîte de transmission par une chaîne cinématique 9. Cette chaîne cinématique 9 est munie par exemple d'un arbre de sortie mis en rotation par la turbine libre.

Plus précisément, l'aéronef 1 de la figure 1 présente un turbomoteur 3.

Indépendamment du nombre de turbomoteurs, l'invention propose de réaliser automatiquement le contrôle de la santé d'au moins un turbomoteur à l'aide d'un dispositif de contrôle 10 de l'aéronef.

En référence à la figure 2, durant une étape préliminaire STP1, on détermine si l'aéronef effectue un vol d'avancement en palier.

Dès lors, en référence à la figure 1, le dispositif de contrôle inclut un dispositif de traitement 11 muni d'un calculateur 12 et d'un moyen de stockage 13 sur un aéronef monomoteur. Le dispositif de traitement peut être le calculateur moteur FADEC du turbomoteur.

Ce dispositif de traitement est relié à un premier système 15 de mesure d'au moins une information relative à un avancement de l'aéronef dans l'espace.

Par exemple, le premier système de mesure inclut un moyen de mesure 20 d'une vitesse d'avancement VIT de l'aéronef et d'une donnée relative à l'altitude de l'aéronef 1. Une telle donnée relative à l'altitude est soit l'altitude pression ZP de l'aéronef soit la pression extérieure P0 de l'air à l'extérieur de l'aéronef.

Si la vitesse d'avancement VIT est supérieure à une vitesse minimale définie par le constructeur et si une variation de la donnée ZP, P0 relative à l'altitude sur une plage temporelle donnée est inférieure à une constante définie par le constructeur, le dispositif de traitement 11 considère que l'aéronef réalise un vol d'avancement en palier.

Par exemple, la vitesse minimale est de l'ordre de 50 noeuds (Kts), et la constante limitant la variation d'altitude est de l'ordre de 10 mètres.

En référence à la figure 2, si l'aéronef effectue un vol d'avancement en palier, durant une étape de vérification de la stabilité STP2 on vérifie la stabilité du turbomoteur à contrôler d'au moins un paramètre de surveillance Ng, TET, T45, Tq, T1.

En référence à la figure 1, le dispositif de traitement 11 est relié à un deuxième système 15 de mesure. Le deuxième système 15 transmet au moins un signal relatif à la valeur d'au moins un paramètre de surveillance Ng, TET, T45, Tq, T1 au dispositif de traitement 11.

Dès lors, le dispositif de traitement 11 acquiert un signal de mesure d'au moins un paramètre de surveillance Ng, TET, T45, Tq, T1 du turbomoteur 3 suivant un échantillonnage défini par le constructeur de l'ordre du dixième de seconde par exemple.

En référence à la figure 3, le dispositif de traitement 11 effectue un premier filtrage par un filtre passe haut de chaque signal SIG reçu sur une première durée TPS1 longue, de l'ordre de 4 minutes par exemple.

Durant cette première durée TPS1, le dispositif de traitement 11 vérifie qu'une première amplitude A1 du signal SIG ainsi filtré ne dépasse pas un premier seuil défini par le constructeur.

Par exemple, le dispositif de traitement 11 effectue une moyenne glissante MOY sur une période définie de l'ordre de 20 secondes de la valeur de chaque paramètre de surveillance Ng, TET, T45, Tq, T1, puis retranche à chaque instant la moyenne glissante adéquate à la valeur du signal SIG étudié.

A l'instant Tex représenté à titre illustratif sur la figure 3, le dispositif de traitement 11 évalue la moyenne glissante MOY1 du paramètre de surveillance étudié, à partir d'un échantillon SIGPER du signal SIG correspondant à ladite période.

Le dispositif de traitement 11 compare alors la différence de la valeur du paramètre de surveillance à l'instant TEX et de cette moyenne glissante MOY1 au premier seuil.

Le premier seuil peut valoir 2% pour la vitesse de rotation Ng du générateur de gaz 4 dudit turbomoteur, 15 degrés Celsius pour la température TET des gaz à l'entrée d'une turbine haute pression 7 du turbomoteur et la température T45 des gaz à l'entrée d'une turbine libre 6 dudit turbomoteur, 2% pour un couple Tq délivré par le turbomoteur, 2 degrés Celsius pour la température d'entrée T1 de l'air à l'entrée du turbomoteur.

De plus, le dispositif de traitement 11 effectue un deuxième filtrage par un filtre passe haut de chaque signal sur une deuxième durée TPS2 courte, de l'ordre de trente secondes par exemple, en parallèle dudit premier filtrage.

On note que la première durée TPS1 et la deuxième durée TPS2 s'achèvent en même temps.

Autrement dit, si chaque paramètre de surveillance est stable pendant une durée égale à la première durée TPS1 moins la deuxième durée TPS2 par application du premier seuil adéquat, le dispositif de traitement réalise un deuxième test de stabilité en parallèle de l'exécution du premier test.

Le dispositif de traitement 11 vérifie ainsi qu'une deuxième amplitude A2 du signal ainsi filtré ne dépasse pas un deuxième seuil défini par le constructeur, la deuxième durée TPS2 étant inférieure à la première durée TPS1, la deuxième amplitude A2 étant inférieure à la première amplitude A1.

Il est possible d'appliquer la méthode précédente faisant intervenir une moyenne glissante.

Le deuxième seuil peut valoir 0.5% pour la vitesse de rotation Ng d'un générateur de gaz dudit turbomoteur, 5 degrés Celsius pour la température TET des gaz à l'entrée d'une turbine haute pression du turbomoteur et la température T45 des gaz à l'entrée d'une turbine libre dudit turbomoteur, 0.5% pour un couple Tq délivré par le turbomoteur, 0.5 degrés Celsius pour la température d'entrée T1 de l'air à l'entrée du turbomoteur.

Dès lors, lorsque la première amplitude A1 est inférieure au premier seuil et lorsque la deuxième amplitude A2 est inférieure au deuxième seuil, le paramètre de surveillance est considéré stable.

En référence à la figure 2, le dispositif de traitement 11 déclenche automatiquement une étape d'acquisition STP3 si chaque paramètre de surveillance considéré est stable.

En parallèle, le dispositif de traitement 11 peut générer une alerte à l'aide d'un moyen de signalisation 50 pour informer un pilote du début d'un contrôle de santé.

A l'issue de l'étape d'acquisition STP3, le dispositif de traitement 11 déclenche automatiquement une étape d'évaluation STP4.

Si les résultats du contrôle de santé ne sont pas satisfaisants, on réalise la maintenance du turbomoteur durant une étape de maintenance STP5.

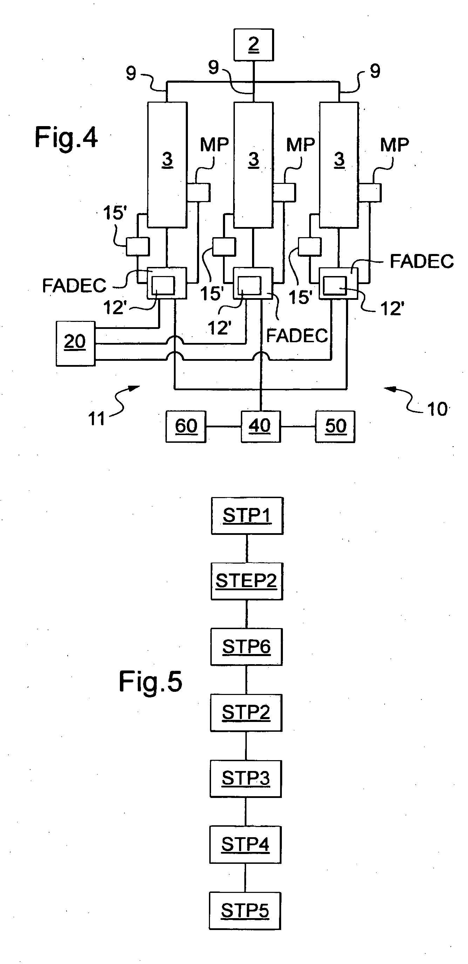

En référence à la figure 4, l'aéronef peut comporter une pluralité de turbomoteurs 3, chaque turbomoteur coopérant avec un calculateur moteur FADEC.

Le calculateur 12 du dispositif de traitement peut comprendre une unité de calcul 12' de chaque calculateur moteur FADEC. De même, le moyen de stockage peut contenir une unité de stockage de chaque calculateur moteur FADEC, chaque unité de stockage contenant les mêmes instructions.

De plus, le dispositif de traitement 11 peut inclure un calculateur avionique 40. Eventuellement, le calculateur avionique 40 est relié à un moyen de signalisation 50 voire à un moyen de désactivation 60 visant à désactiver le contrôle de santé automatique.

Par ailleurs, le premier système de mesure 20 peut être relié à chaque unité de calcul 12' du calculateur 12. Le deuxième système 15 de mesure peut inclure une unité de mesure 15' par turbomoteur qui coopère avec l'unité de calcul 12' adéquate.

Le calculateur avionique 40 peut désigner un turbomoteur à contrôler. Le choix du turbomoteur à contrôler peut être établi en fonction d'une stratégie définie par le constructeur et mémorisée.

Le calculateur moteur FADEC de ce turbomoteur 3 à contrôler effectue alors l'étape préliminaire STP1, et le cas échéant l'étape de vérification de la stabilité STP2.

Il est à noter que l'étape préliminaire peut aussi être réalisée par le calculateur avionique 40, ce calculateur avionique 40 communiquant alors avec le premier système de mesure 20 à cet effet.

En référence à la figure 5, suite à l'étape de vérification de la stabilité STP2, le dispositif de traitement 11 peut requérir la désactivation du prélèvement d'air sur le turbomoteur 3 à contrôler avant de déclencher l'étape d'acquisition STP3, et pour augmenter le prélèvement d'air effectué sur au moins un autre turbomoteur 3 pour compenser un telle désactivation.

Le dispositif de contrôle comporte un moyen de réglage du moyen de prélèvement MP d'air P3, ce moyen de réglage pouvant être le calculateur moteur FADEC de chaque turbomoteur.

Dans ces conditions, le calculateur avionique 40 peut indiquer au calculateur moteur FADEC du turbomoteur à contrôler de fermer le moyen de prélèvement MP de ce turbomoteur à contrôler.

Par contre, le calculateur avionique 40 peut indiquer au calculateur moteur FADEC d'au moins un autre turbomoteur d'augmenter le prélèvement d'air réalisé par mesure de compensation.

Il est possible de mettre en oeuvre une nouvelle étape de vérification de la stabilité STP2 avant de mettre en oeuvre l'étape d'acquisition STP3 ;

Cette nouvelle étape de vérification de la stabilité STP2 peut être identique à la précédente, ou encore être réalisée en employant des première durée TPS1 et deuxième TPS2 différentes.

## Revendications

1. Procédé pour réaliser automatiquement un contrôle de santé moteur d'au moins un turbomoteur (3) d'un aéronef (1) comprenant une étape d'acquisition (STP3) d'au moins un paramètre de surveillance (Ng, TET, T45, Tq, T1) du turbomoteur (3) et d'une étape d'évaluation (STP4) de la santé dudit turbomoteur (3),
**caractérisé en ce que** durant le vol :
- on détermine si l'aéronef effectue un vol d'avancement en palier, et
- on vérifie la stabilité d'au moins un paramètre de surveillance (Ng, TET, T45, Tq, T1) en :
∘ acquérant un signal de mesure d'au moins un paramètre de surveillance (Ng, TET, T45, Tq, T1) du turbomoteur (1) suivant un échantillonnage défini par le constructeur,
∘ effectuant un premier filtrage par un filtre passe haut de chaque signal sur une première durée (TPS1) longue et en vérifiant qu'une première amplitude (A1) du signal ainsi filtré ne dépasse pas un premier seuil défini par le constructeur,
∘ effectuant un deuxième filtrage par un filtre passe haut de chaque signal sur une deuxième durée (TPS2) courte en parallèle dudit premier filtrage par un filtre passe haut et en vérifiant qu'une deuxième amplitude (A2) du signal ainsi filtré ne dépasse pas un deuxième seuil défini par le constructeur, la deuxième durée (TPS2) étant inférieure à la première durée (TPS1), la deuxième amplitude (A2) étant inférieure à la première amplitude (A1), et
∘ en considérant stable un paramètre de surveillance stable lorsque ladite première amplitude (A1) est inférieure au premier seuil et lorsque ladite deuxième amplitude (A2) est inférieure au deuxième seuil, et
- on déclenche automatiquement une étape d'acquisition (STP3) si chaque paramètre de surveillance est stable.

2. Procédé selon la revendication 1,
**caractérisé en ce que** pour déterminer si l'aéronef (1) effectue un vol d'avancement en palier, on mesure une vitesse d'avancement (VIT) de l'aéronef et une donnée (ZP, P0) relative à l'altitude de l'aéronef (1), l'aéronef (1) réalisant un vol en palier si la vitesse d'avancement (VIT) est supérieure à une vitesse minimale définie par le constructeur et si une variation de la donnée (ZP, P0) relative à l'altitude sur une plage temporelle donnée est inférieure à une constante définie par le constructeur.

3. Procédé selon la revendication 2,
**caractérisé en ce que** ladite donnée relative à l'altitude est soit l'altitude pression (ZP) de l'aéronef soit la pression extérieure (P0) de l'air à l'extérieur de l'aéronef.

4. Procédé selon l'une quelconque des revendications 1 à 3,
**caractérisé en ce que** la première durée (TPS1) et la deuxième durée (TPS2) s'achèvent en même temps.

5. Procédé selon l'une quelconque des revendications 1 à 4, **caractérisé en ce que** la première durée (TPS1) vaut 4 minutes, la deuxième durée (TPS2) valant 30 secondes.

6. Procédé selon l'une quelconque des revendications 1 à 5,
**caractérisé en ce que** chaque paramètre de surveillance est à choisir dans une liste incluant au moins un des paramètres suivants : la vitesse de rotation (Ng) d'un générateur de gaz dudit turbomoteur, une température (TET) des gaz à l'entrée d'une turbine haute pression du turbomoteur, une température (T45) des gaz à l'entrée d'une turbine libre dudit turbomoteur, un couple (Tq) délivré par le turbomoteur, une température d'entrée (T1) de l'air à l'entrée du turbomoteur.

7. Procédé selon la revendication 6,
**caractérisé en ce que** le premier seuil vaut 2% pour la vitesse de rotation (Ng) d'un générateur de gaz dudit turbomoteur, 15 degrés Celsius pour la température (TET) des gaz à l'entrée d'une turbine haute pression du turbomoteur et la température (T45) des gaz à l'entrée d'une turbine libre dudit turbomoteur, 2% pour un couple (Tq) délivré par le turbomoteur, 2 degrés Celsius pour la température d'entrée (T1) de l'air à l'entrée du turbomoteur.

8. Procédé selon l'une quelconque des revendications 6 à 7,
**caractérisé en ce que** le deuxième seuil vaut 0.5% pour la vitesse de rotation (Ng) d'un générateur de gaz dudit turbomoteur, 5 degrés Celsius pour la température (TET) des gaz à l'entrée d'une turbine haute pression du turbomoteur et la température (T45) des gaz à l'entrée d'une turbine libre dudit turbomoteur, 0.5% pour un couple (Tq) délivré par le turbomoteur, 0.5 degrés Celsius pour la température d'entrée (T1) de l'air à l'entrée du turbomoteur.

9. Procédé selon l'une quelconque des revendications 1 à 8,
**caractérisé en ce que** pour effectuer un filtrage par un filtre passe haut, on effectue une moyenne glissante sur une période définie par le constructeur de la valeur de chaque paramètre de surveillance (Ng, TET, T45, Tq, T1), puis on retranche cette moyenne glissante à la valeur du signal correspondant à ce paramètre de surveillance (Ng, TET, T45, Tq, T1).

10. Procédé selon l'une quelconque des revendications 1 à 9,
**caractérisé en ce que** lors de l'étape d'acquisition, on génère une alerte pour informer un pilote afin d'éviter une manoeuvre brusque de ce pilote.

11. Procédé selon l'une quelconque des revendications 1 à 10,
**caractérisé en ce que**, ledit aéronef (1) comportant au moins deux turbomoteurs (3), on désactive un prélèvement d'air effectué sur un générateur de gaz (4) du turbomoteur (3) à contrôler avant de déclencher l'étape d'acquisition (STP3), et on augmente le prélèvement d'air effectué sur au moins un autre turbomoteur (3) pour compenser un telle désactivation.

12. Procédé selon la revendication 11,
**caractérisé en ce que** suite à la désactivation du prélèvement d'air effectué sur un générateur de gaz (4) du turbomoteur (3) à contrôler, on vérifie de nouveau la stabilité d'au moins un paramètre de surveillance (Ng, TET, T45, Tq, T1) du turbomoteur (3), et on déclenche l'étape d'acquisition (STP3) si chaque paramètre de surveillance (Ng, TET, T45, Tq, T1) est stable.

13. Dispositif de contrôle (10) pour réaliser automatiquement un contrôle de santé moteur d'au moins un turbomoteur (3) d'un aéronef (1) comprenant une étape d'acquisition (STP3) d'au moins un paramètre de surveillance (Ng, TET, T45, Tq, T1) du turbomoteur (4) et d'une étape d'évaluation (STP4) de la santé dudit turbomoteur (3) à contrôler,
**caractérisé en ce que** ce dispositif de contrôle (10) comporte :
- un premier système (20) de mesure d'au moins une information (VIT, ZP, P0) relative à un avancement de l'aéronef (1) dans l'espace, et
- un deuxième système (15) de mesure générant au moins un signal relatif à la valeur d'au moins un paramètre de surveillance (Ng, TET, T45, Tq, T1), et
- un dispositif de traitement (11) muni d'un calculateur (12) et d'un moyen de stockage (13), le calculateur (12) exécutant des instructions mémorisées dans le moyen de stockage (13) pour vérifier la stabilité d'au moins un paramètre de surveillance (Ng, TET, T45, Tq, T1) selon le procédé des revendications 1 à 12 à partir dudit au moins un signal et pour déclencher automatiquement une étape d'acquisition (STP3) si chaque paramètre de surveillance (Ng, TET, T45, Tq, T1) est stable.

14. Dispositif de contrôle selon la revendication 13,
**caractérisé en ce que** ledit aéronef (1) comportant au moins deux turbomoteurs (3), chaque turbomoteur (3) ayant un moyen de prélèvement (MP) d'air sur un générateur de gaz (4) de ce turbomoteur ledit dispositif de traitement (11) est relié à chaque moyen de prélèvement (MP) pour désactiver le prélèvement d'air sur le turbomoteur (3) à contrôler avant de déclencher l'étape d'acquisition (STP3) et pour augmenter le prélèvement d'air effectué sur au moins un autre turbomoteur (3) pour compenser un telle désactivation.

15. Aéronef (1).
**caractérisé en ce que** cet aéronef (1) comporte un dispositif de contrôle (10) selon l'une quelconque des revendications 13 à 14.

## Patentansprüche

1. Verfahren zur automatischen Überprüfung des Zustands eines Turbomotors (3) eines Luftfahrzeugs (1) mit einem Schritt (STP3) der Erfassung mindestens eines Überwachungsparameters (Ng, TET, T45, Tq, T1) des Turbomotors (3) und einem Schritt (STP4) der Bewertung des Zustands des Turbomotors (3),
**dadurch gekennzeichnet, dass** während des Flugs:
- bestimmt wird, ob das Luftfahrzeug einen Horizontalflug absolviert, und
- die Stabilität mindestens eines Überwachungsparameters (Ng, TET, T45, Tq, T1) überprüft wird, indem:
∘ ein Messsignal mindestens eines Überwachungsparameters (Ng, TET, T45, Tq, T1) des Turbomotors (3) gemäß einer von dem Hersteller definierten Stichprobenerhebung erfasst wird,
∘ eine erste Filterung jedes Signals über eine erste lange Dauer (TPS1) mit einem Hochpassfilter ausgeführt wird und indem überprüft wird, ob eine erste Amplitude (A1) des so gefilterten Signals nicht einen ersten vom Hersteller definierten Schwellenwert überschreitet,
∘ eine zweite Filterung jedes Signals über eine zweite kurze Zeitdauer (TPS2) mit einem Hochpassfilter parallel zur ersten Filterung durch einen Hochpassfilter durchgeführt wird und indem überprüft wird, ob eine zweite Amplitude (A2) des so gefilterten Signals nicht einen zweiten Schwellenwert überschreitet, der vom Hersteller definiert ist, wobei die zweite Zeitdauer (TPS2) kleiner ist als die erste Zeitdauer (TPS1), wobei die zweite Amplitude (A2) kleiner als die erste Amplitude (A1) ist, und
∘ ein stabiler Überwachungsparameter als stabil angesehen wird, wenn die erste Amplitude (A1) kleiner als der erste Schwellenwert ist, und wenn die zweite Amplitude (A2) kleiner als der zweite Schwellenwert ist, und
- automatisch ein Erfassungsschritt (STP3) ausgelöst wird, wenn jeder Überwachungsparameter stabil ist.

2. Verfahren nach Anspruch 1,
**dadurch gekennzeichnet, dass** zur Bestimmung, ob das Luftfahrzeug (1) einen Horizontalflug ausübt, eine Vortriebsgeschwindigkeit (VIT) des Luftfahrzeugs und eine Größe (ZP, PO) bezüglich der Höhe des Luftfahrzeugs (1) gemessen werden, wobei das Luftfahrzeug (1) einen Horizontalflug ausführt, wenn die Vortriebsgeschwindigkeit (VIT) größer als eine vom Hersteller definierte Minimalgeschwindigkeit ist und wenn eine Schwankung der Größe (ZP, PO) bezüglich der Höhe in einem vorgegebenen Zeitfenster kleiner ist als eine vom Hersteller definierte Konstante.

3. Verfahren nach Anspruch 2,
**dadurch gekennzeichnet, dass** die Größe bezüglich der Höhe entweder die Druckhöhe (ZP) des Luftfahrzeugs oder der Luftdruck (PO) außerhalb des Luftfahrzeugs ist.

4. Verfahren nach einem der Ansprüche 1 bis 3,
**dadurch gekennzeichnet, dass** die erste Zeitdauer (TPS1) und die zweite Zeitdauer (TPS2) zur gleichen Zeit enden.

5. Verfahren nach einem der Ansprüche 1 bis 4,
**dadurch gekennzeichnet, dass** die erste Zeitdauer (TPS1) 4 Minuten beträgt und die zweite Zeitdauer (TPS2) 30 Sekunden beträgt.

6. Verfahren nach einem der Ansprüche 1 bis 5,
**dadurch gekennzeichnet, dass** jeder Überwachungsparameter aus einer Liste auszuwählen ist, die mindestens einen der folgenden Parameter umfasst: die Drehgeschwindigkeit (Ng) eines Gasgenerators des Turbomotors, eine Gastemperatur (TET) am Eingang einer Hochdruckturbine des Turbomotors, eine Gastemperatur (T45) am Eingang einer Freilaufturbine des Turbomotors, ein Drehmoment (Tq), das von dem Turbomotor erzeugt wird, eine Lufteintrittstemperatur (T1) am Eingang des Turbomotors.

7. Verfahren nach Anspruch 6,
**dadurch gekennzeichnet, dass** der erste Schwellenwert 2% für die Drehgeschwindigkeit (Ng) eines Gasgenerators des Turbomotors, 15 °C für die Temperatur (TET) der Gase am Eingang einer Hochdruckturbine des Turbomotors und für die Gastemperatur (T45) am Eingang einer Freilaufturbine des Turbomotors, 2% für ein vom Turbomotor abgegebenes Drehmoment (Tq), 2 °C für die Lufteintrittstemperatur (T1) am Eingang des Turbomotors beträgt.

8. Verfahren nach einem der Ansprüche 6 bis 7,
**dadurch gekennzeichnet, dass** der zweite Schwellenwert 0,5 % für die Drehgeschwindigkeit (Ng) eines Gasgenerators des Turbomotors, 5 °C für die Gastemperatur (TET) am Eingang einer Hochdruckturbine des Turbomotors und für die Gastemperatur (T45) am Eingang einer Freilaufturbine des Turbomotors, 0,5% für ein von dem Turbomotor abgegebenes Drehmoment (Tq), 0,5 °C für die Lufteintrittstemperatur (T1) am Eingang des Turbomotors beträgt.

9. Verfahren nach einem der Ansprüche 1 bis 8,
**dadurch gekennzeichnet, dass**, um eine Filterung durch einen Hochpassfilter durchzuführen, eine gleitende Mittelung über einen vom Hersteller definierten Zeitraum des Wertes eines jeden Überwachungsparameters (Ng, TET, T45, Tq, T1) durchgeführt wird, und anschließend dieser gleitende Mittelwert von dem Wert des Signals subtrahiert wird, das diesem Überwachungsparameter (Ng, TET, T45, Tq, T1) entspricht.

10. Verfahren nach einem der Ansprüche 1 bis 9,
**dadurch gekennzeichnet, dass** während des Erfassungsschrittes ein Alarm erzeugt wird, um einen Piloten zu informieren, damit ein abruptes Manöver dieses Piloten verhindert wird.

11. Verfahren nach einem der Ansprüche 1 bis 10,
**dadurch gekennzeichnet, dass** das Luftfahrzeug (1) mindestens zwei Turbomotoren (3) aufweist und eine Luftentnahme am Gasgenerator (4) des zu überprüfenden Turbomotors (3) deaktiviert wird, bevor der Erfassungsschritt (STP3) ausgelöst wird, und die an mindestens einem anderen Turbomotor (3) durchgeführte Luftentnahme erhöht wird, um eine solche Deaktivierung zu kompensieren.

12. Verfahren nach Anspruch 11,
**dadurch gekennzeichnet, dass** nach der Deaktivierung der Luftentnahme an einem Gasgenerator (4) des zu überprüfenden Turbomotors (3) erneut die Stabilität mindestens eines Überwachungsparameters (Ng, TET, T45, Tq, T1) des Turbomotors (3) überprüft wird, und der Erfassungsschritt (STP3) ausgelöst wird, wenn jeder Überwachungsparameter (Ng, TET, T45, Tq, T1) stabil ist.

13. Überprüfungsvorrichtung (10) zur automatischen Überprüfung des Zustands eines Turbomotors (3) eines Luftfahrzeugs (1), welche einen Schritt (STP3) der Erfassung mindestens eines Überwachungsparameters (Ng, TET, T45, Tq, T1) des Turbomotors (3) und einen Schritt der Bewertung (STP4) des Zustands des zu überprüfenden Turbomotors (3) umfasst,
**dadurch gekennzeichnet, dass** die Überprüfungsvorrichtung (10) aufweist:
- ein erstes System (20) zur Messung mindestens einer Information (VIT, ZP, PO) bezüglich eines Vortriebs des Luftfahrzeugs (1) im Raum und
- ein zweites Messsystem (15), welches mindestens ein Signal bezüglich des Wertes mindestens eines Überwachungsparameters (Ng, TET, T45, Tq, T1) erzeugt, und
- eine Verarbeitungsvorrichtung (11), die mit einem Rechner (12) und einem Speichermittel (13) versehen ist, wobei der Rechner (12) in dem Speichermittel (13) abgespeicherte Befehle ausführt, um die Stabilität mindestens eines Überwachungsparameters (Ng, TET, T45, Tq, T1) gemäß dem Verfahren nach den Ansprüchen 1 bis 12 zu überprüfen, ausgehend von dem mindestens einen Signal, und um automatisch einen Erfassungsschritt (STP3) auszulösen, wenn jeder Überwachungsparameter (Ng, TET, T45, Tq, T1) stabil ist.

14. Überprüfungsvorrichtung nach Anspruch 13,
**dadurch gekennzeichnet, dass** das Luftfahrzeug (1) mindestens zwei Turbomotoren (3) aufweist, wobei jeder Turbomotor (3) ein Mittel (MP) zur Entnahme von Luft an einem Gaserzeuger (4) dieses Turbomotors aufweist, wobei die Verarbeitungsvorrichtung (11) mit jedem Entnahmemittel (MP) verbunden ist, um die Luftentnahme an dem zu überprüfenden Turbomotor (3) zu deaktivierten, bevor der Erfassungsschritt (STP3) ausgelöst wird, und um die an dem mindestens einen anderen Turbomotor (3) ausgeführte Luftentnahme zu steigern, um eine solche Deaktivierung zu kompensieren.

15. Luftfahrzeug (1),
**dadurch gekennzeichnet, dass** dieses Luftfahrzeug (1) eine Überprüfungsvorrichtung (10) nach einem der Ansprüche 13 bis 14 aufweist.

## Claims

1. A method for automatically performing an engine health check on at least one turboshaft engine (3) of an aircraft (1), comprising an acquisition step (STP3) for acquiring at least one monitoring parameter (Ng, TET, T45, Tq, T1) of the turboshaft engine (3) and an evaluation step (STP4) for evaluating the health of said turboshaft engine (3),
**characterised in that**, during flight:
- it is determined whether the aircraft is flying in level forward flight, and
- the stability of at least one monitoring parameter (Ng, TET, T45, Tq, T1) is verified by:
∘ acquiring a measurement signal of at least one monitoring parameter (Ng, TET, T45, Tq, T1) of the turboshaft engine (1) in accordance with sampling defined by the manufacturer,
∘ carrying out a first filtering of each signal by a high-pass filter over a first, long, duration (TPS1), and verifying that a first amplitude (A1) of the signal thus filtered does not exceed a first threshold defined by the manufacturer,
∘ carrying out a second filtering of each signal by a high-pass filter over a second, short, duration (TPS2) in parallel with said first filtering by a high-pass filter, and verifying that a second amplitude (A2) of the signal thus filtered does not exceed a second threshold defined by the manufacturer, the second duration (TPS2) being less than the first duration (TPS1), the second amplitude (A2) being less than the first amplitude (A1), and
∘ considering a stable monitoring parameter to be stable when said first amplitude (A1) is less than the first threshold and when said second amplitude (A2) is less than the second threshold, and
- an acquisition step (STP3) is triggered automatically if each monitoring parameter is stable.

2. A method according to Claim 1,
**characterised in that**, in order to determine whether the aircraft (1) is flying in level forward flight, a forward speed (VIT) of the aircraft is measured and a data item (ZP, P0) relating to the altitude of the aircraft (1) is measured, the aircraft (1) flying in level flight if the forward speed (VIT) is greater than a minimum speed defined by the manufacturer and if a variation in the data item (ZP, P0) relating to the altitude over a given time interval is less than a constant defined by the manufacturer.

3. A method according to Claim 2,
**characterised in that** said data item relating to the altitude is either the pressure altitude (ZP) of the aircraft or the external pressure (P0) of the air outside the aircraft.

4. A method according to any one of Claims 1 to 3,
**characterised in that** the first duration (TPS1) and the second duration (TPS2) end at the same time.

5. A method according to any one of Claims 1 to 4,
**characterised in that** the first duration (TPS1) is 4 minutes, the second duration (TPS2) being 30 seconds.

6. A method according to any one of Claims 1 to 5,
**characterised in that** each monitoring parameter is to be selected from a list including at least one of the following parameters: the speed of rotation (Ng) of a gas generator of said turboshaft engine, a temperature (TET) of the gases at the inlet of a high-pressure turbine of the turboshaft engine, a temperature (T45) of the gases at the inlet of a free turbine of said turboshaft engine, a torque (Tq) delivered by the turboshaft engine, an inlet temperature (T1) of the air at the inlet of the turboshaft engine.

7. A method according to Claim 6,
**characterised in that** the first threshold is 2% for the speed of rotation (Ng) of a gas generator of said turboshaft engine, 15 degrees Celsius for the temperature (TET) of the gases at the inlet of a high-pressure turbine of the turboshaft engine and the temperature (T45) of the gases at the inlet of a free turbine of said turboshaft engine, 2% for a torque (Tq) delivered by the turboshaft engine, 2 degrees Celsius for the inlet temperature (T1) of the air at the inlet of the turboshaft engine.

8. A method according to any one of Claims 6 to 7,
**characterised in that** the second threshold is 0.5% for the speed of rotation (Ng) of a gas generator of said turboshaft engine, 5 degrees Celsius for the temperature (TET) of the gases at the inlet of a high-pressure turbine of the turboshaft engine and the temperature (T45) of the gases at the inlet of a free turbine of said turboshaft engine, 0.5% for a torque (Tq) delivered by the turboshaft engine, 0.5 degrees Celsius for the inlet temperature (T1) of the air at the inlet of the turboshaft engine.

9. A method according to any one of Claims 1 to 8,
**characterised in that** in order to carry out filtering by a high-pass filter, a moving average is taken, over a period defined by the manufacturer, of the value of each monitoring parameter (Ng, TET, T45, Tq, T1), then this moving average is deducted from the value of the signal corresponding to this monitoring parameter (Ng, TET, T45, Tq, T1).

10. A method according to any one of Claims 1 to 9,
**characterised in that** during the acquisition step a warning is generated to inform a pilot in order to avoid a sudden manoeuvre by this pilot.

11. A method according to any one of Claims 1 to 10,
**characterised in that**, said aircraft (1) comprising at least two turboshaft engines (3), an air bleed carried out on a gas generator (4) of the turboshaft engine (3) to be checked is deactivated before triggering the acquisition step (STP3), and the air bleed carried out on at least one other turboshaft engine (3) is increased in order to compensate for such deactivation.

12. A method according to Claim 11,
**characterised in that** following the deactivation of the air bleed carried out on a gas generator (4) of the turboshaft engine (3) to be checked, the stability of at least one monitoring parameter (Ng, TET, T45, Tq, T1) of the turboshaft engine (3) is verified once again, and the acquisition step (STP3) is triggered if each monitoring parameter (Ng, TET, T45, Tq, T1) is stable.

13. A checking device (10) for automatically performing an engine health check on at least one turboshaft engine (3) of an aircraft (1) comprising an acquisition step (STP3) for acquiring at least one monitoring parameter (Ng, TET, T45, Tq, T1) of the turboshaft engine (4) and an evaluation step (STP4) for evaluating the health of said turboshaft engine (3) to be checked,
**characterised in that** this checking device (10) comprises:
- a first system (20) for measuring at least one item of information (VIT, ZP, P0) relating to a forward movement of the aircraft (1) in space, and
- a second measurement system (15) generating at least one signal relating to the value of at least one monitoring parameter (Ng, TET, T45, Tq, T1), and
- a processing device (11) provided with a computer (12) and a storage means (13), the computer (12) executing instructions stored in the storage means (13) in order to verify the stability of at least one monitoring parameter (Ng, TET, T45, Tq, T1) in accordance with the method of Claims 1 to 12 from said at least one signal and to trigger automatically an acquisition step (STP3) if each monitoring parameter (Ng, TET, T45, Tq, T1) is stable.

14. A checking device according to Claim 13,
**characterised in that**, said aircraft (1) comprising at least two turboshaft engines (3), each turboshaft engine (3) having an air bleed means (MP) for bleeding air from a gas generator (4) of this turboshaft engine, said processing device (11) is connected to each bleed means (MP) for deactivating the bleeding of air from the turboshaft engine (3) to be checked before triggering the acquisition step (STP3) and for increasing the air bleed which is carried out on at least one other turboshaft engine (3) in order to compensate for such a deactivation.

15. An aircraft (1),
**characterised in that** this aircraft (1) comprises a checking device (10) according to any one of Claims 13 to 14.
